# FASCICULE DE BREVET EUROPEEN

(11) **EP 0 841 605 B1**
(45) Date de publication et mention de la délivrance du brevet: **24.04.2002**
(21) Numéro de dépôt: 97402660.1
(22) Date de dépôt: 06.11.1997
(51) Int. Cl.: G05B 19/042

(54) **Centrale domotique**
Hausleittechniksteuerungsgerät
Home automation control device

(30) Priorité: 07.11.1996 FR 9613607
(43) Date de publication de la demande: 13.05.1998
(73) Titulaire: INTERBLUE, 75611 Paris Cédex 12 (FR)
(72) Inventeur: Ayme, Christian Robert, 78470 Saint Remy les Cheuvreuse (FR); Josse, Jean-Pierre, 78370 Plaisir (FR)
(74) Mandataire: Caron, Gérard

(56) Documents cités:
- EP-A- 0 333 057
- EP-A- 0 570 281
- WO-A-96/07957
- US-A- 5 329 431

## Description

La présente invention est relative à la technique de gestion automatisée pouvant être appliquée notamment dans l'habitat moderne. A l'heure actuelle, cette technique de gestion reçoit l'appellation de "domotique", terme que l'on utilisera dans la suite de la présente description.

Plus particulièrement, l'invention concerne une centrale domotique permettant de mettre en oeuvre ladite gestion automatisée.

Une centrale domotique installée dans une habitation est généralement destinée à la gestion de l'énergie et de la sécurité d'une habitation ou d'un bâtiment et également au pilotage d'un certain nombre d'appareils ou installations, comme par exemple les appareils ménagers (lave-linge, lave-vaisselle, appareils de réfrigération etc.), les installations de chauffage central et/ou de climatisation, les installations d'alarme, les installations audio et/ou vidéo et autres.

La communication entre les différents éléments raccordés à une centrale domotique se fait à l'aide de protocoles selon lesquels sont codés et acheminés les messages nécessaires tant à commander les éléments, qu'à informer la centrale de l'état de chacun d'entre eux, par exemple pour envoyer quittance de la bonne exécution d'une commande. Un exemple d'une centrale domotique telle que décrite est donné dans le document EP 0 570 281.

Or, le développement des centrales domotiques est actuellement freiné en raison du fait qu'il n'existe pas d'uniformisation des protocoles qui en principe sont différents d'un fabricant à l'autre. Ceci oblige les utilisateurs à s'équiper d'appareils et installations provenant tous du même fabricant ou du moins de plusieurs fabricants utilisant le même protocole, ce qui n'est pas fréquent.

Dans d'autres domaines de la technique du contrôle, le même problème a déjà été, abordé. Par exemple, le document US 5329431 décrit un système de contrôle d'éclairage pour scène dans lequel l'adaptation éventuelle entre protocoles différents est effectuée au niveau des interfaces.

L'invention a pour but de fournir une centrale domotique pouvant travailler avec tout protocole existant afin de permettre le pilotage d'appareils et/ou d'installations de toute nature ayant des protocoles de différentes natures et étant tous connectés ensemble à cette centrale domotique.

L'invention a donc pour objet une centrale domotique destinée à la gestion d'équipements dans une habitation, bâtiment ou analogue, les équipements étant raccordés à au moins un réseau et étant commandés par des protocoles pouvant être différents d'un équipement à l'autre, ladite centrale comprenant une unité centrale de gestion communiquant d'une part avec des interfaces d'entrée adaptées pour recevoir de l'extérieur des commandes d'utilisateur à exécuter par lesdits équipements et pour transmettre à partir de ladite unité centrale des messages en retour renseignant l'utilisateur sur l'état desdits équipements, ladite unité centrale de gestion communiquant également avec des interfaces de sortie destinées à transférer avec un format approprié lesdites commandes et lesdits messages en retour respectivement entre ladite unité centrale et lesdits équipements, ladite unité centrale de gestion étant caractérisé en ce qu'elle comprend
- des moyens pour mémoriser pour chacun desdits équipements un jeu de caractéristiques propres à cet équipement et comprenant notamment son protocole de commande et son adresse dans ledit réseau,
- des moyens pour mémoriser une pluralité de données relatives à des types de commandes susceptibles d'être exécutées par lesdits équipements,
et en ce que ladite unité centrale de gestion est agencée pour, à la réception d'une commande en provenance d'une quelconque desdites interfaces,
- extraire desdits moyens de mémorisation de caractéristiques, le protocole correspondant à ladite commande pour former une trame de message protocolaire, ainsi que l'adresse dans le réseau de l'équipement concerné,
- extraire desdits moyens de mémorisation de données, celles correspondant au type de commande à exécuter, et
- associer à ladite trame lesdites données d'adresse et de type de commande et le cas échéant des valeurs de commande contenues dans ladite commande d'utilisateur à exécuter.

D'autres caractéristiques et avantages de l'invention apparaîtront au cours de la description qui va suivre, donnée uniquement à titre d'exemple et faite en se référant aux dessins annexés sur lesquels:
- la figure 1 est un schéma simplifié d'une centrale domotique selon l'invention;
- la figure 2 montre la composition d'une trame de message protocolaire utilisée dans la centrale domotique de la figure 1, et illustre également les moyens de mémoire à partir desquels une telle trame peut être transformée en un message protocolaire destiné à la réalisation d'une commande applicative auprès d'un équipement commandé par la centrale domotique;
- la figure 3 montre un message protocolaire obtenu à partir d'une trame de la figure 2 par l'insertion dans celle-ci d'éléments d'information traduisant la commande applicative;
- la figure 4 est un schéma analogue à celui de la figure 3 montrant un message protocolaire basé sur un protocole de commande différent de celui utilisé dans les figures 2 et 3;
- la figure 5 est un organigramme illustrant le programme mis en oeuvre dans la centrale domotique selon l'invention pour la constitution, puis l'émission d'un message protocolaire à destination d'un équipement branché sur la centrale domotique; et
- la figure 6 est un organigramme illustrant le programme mis en oeuvre dans la centrale domotique pour la réception d'un message de retour en provenance d'un tel équipement.

Dans la description qui va suivre, les définitions suivantes sont applicables :
- Commande applicative : commande utilisable par l'utilisateur quelque soit le constructeur, le type d'appareil, le protocole et le média de communication utilisé (par exemple, la commande applicative « mise en marche » ou « arrêt » d'un appareil);
- Message protocolaire : pour assurer l'exécution d'une commande applicative, la centrale domotique doit exécuter un ou plusieurs messages dits « protocolaires » sur le réseau correspondant à un protocole et à un média de communication pour l'appareil concerné, et ce, en fonction de la description de la commande applicative dans la bibliothèque de commande de la version de protocole;
- Interface protocolaire : moyen matériel et logiciel utilisé en sortie de la centrale domotique et permettant d'accéder au réseau de communication en fonction du protocole et du média correspondant au message protocolaire à émettre ou à recevoir.

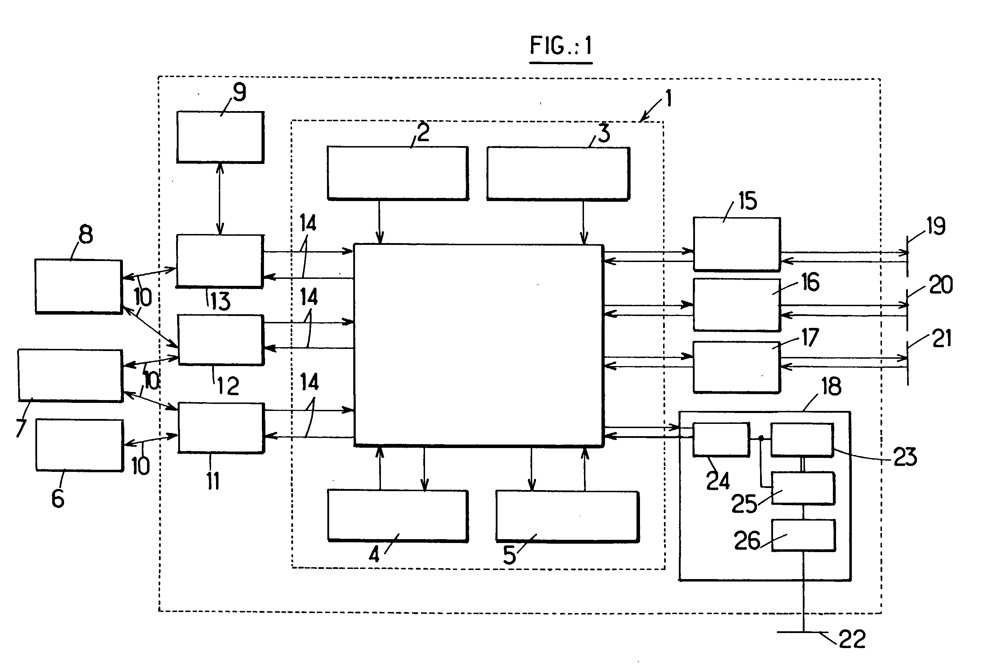

Ceci étant, on va maintenant décrire la figure 1 qui est un schéma simplifié d'un mode de réalisation préféré de la centrale domotique selon l'invention

Cette centrale comprend une unité centrale de gestion 1 appelée aussi "moteur domotique" par les spécialistes. Cette unité centrale de gestion peut être un microprocesseur du commerce de la série x86, par exemple.

L'unité centrale de gestion 1 est associée de la façon habituelle à une mémoire de programme et à une mémoire de travail (non représentées) et, pour les besoins de la mise en oeuvre de l'invention, à plusieurs mémoires ROM 2, 3, 4 et 5 qui constituent respectivement:
- une librairie de protocoles (2) dans laquelle sont stockées les caractéristiques de tous les protocoles de communication des appareils qui sont raccordés à la centrale domotique, chacun de ces protocoles pouvant être présent sous différentes versions fournies au fur et à mesure par les constructeurs des appareils en question;
- une bibliothèque de commandes (3) dans laquelle sont stockées les commandes des appareils sous la forme correspondant à chaque protocole et/ou à chaque version de protocole;
- une table de caractéristiques des appareils (5) dans laquelle sont stockées les descriptions des types des appareils (gros électroménager, convecteurs électriques et autres) indépendamment du protocole de communication de chacun de ces équipements et permettant d'utiliser d'une manière identique différents équipements de même type.
- une mémoire de modules applicatifs (4) capables de mettre en oeuvre des fonctions de différents équipements installés en vue par exemple de la gestion de l'énergie, de la surveillance de l'habitation, de la programmation d'un équipement audio/vidéo etc.

L'unité centrale 1 peut d'abord dialoguer avec l'extérieur au moyen d'interfaces d'utilisateur 6 à 9.

L'interface 6 appelée "interface homme-machine" est destinée à assurer la présentation intelligible pour l'utilisateur de l'état des différents équipements raccordés à la centrale 1 et de lui permettre d'installer, de commander et de programmer ces équipements. En général, il peut y avoir plusieurs de ces interfaces homme-machine, un exemple typique étant par exemple un thermostat d'ambiance régissant le fonctionnement de l'installation de chauffage central.

Une autre interface 7 peut être un modem téléphonique au moyen duquel les fonctions exécutées par les équipements peuvent être déclenchées et/ou contrôlées à distance.

Une interface analogue 8 peut être raccordée à un ordinateur domestique au moyen duquel l'utilisateur peut également déclencher des fonctions, les contrôler et/ou les programmer.

Une quatrième interface 9 peut être celle raccordée à une installation de télévision ou de vidéo interactive.

Chacune de ces interfaces communique par des liaisons bidirectionnelles 10 avec des modules d'entrée 11, 12 et 13 afin d'assurer une présentation standard des données reçues ou à émettre, en fonction du média de communication concerné par les données en question. Les modules d'entrée communiquent avec l'unité centrale 1 à travers des liaisons bidirectionnelles 14.

Du côté des équipements, l'unité centrale 1 communique avec des interfaces dites protocolaires 15 à 18 (voir définition ci-dessus) qui peuvent être reliées respectivement à différents réseaux 19 à 22. L'un de ces réseaux 22 est par exemple le réseau d'alimentation en énergie électrique de l'habitation auquel sont connectés différents équipements. Dans ce cas, les signaux provenant de l'unité centrale 1 et ceux provenant des équipements passent par les fils d'alimentation électriques des équipements au moyen de ce que l'on appelle habituellement les "transmissions par courants porteurs". La technique de gestion est régie en France par la norme EN NF 50.065-1.

Une telle interface protocolaire 18 comporte un microcontrôleur 23, une horloge 24 raccordée à ce microcontrôleur 23, un modem 25 pour les courants porteurs recevant ses signaux d'entrée du microcontrôleur 23 et un filtre 26 pour transférer les courants porteurs sur le réseau d'alimentation 22.

Les autres interfaces 15 à 17 peuvent être raccordées à des réseaux filaires ou hertziens fonctionnant par modulation d'amplitude, par modulation de fréquence ou toute autre système de communication analogue, l'interface concernée comprenant, chaque fois, les cartes électroniques nécessaires pour assurer la transformation adéquate des données en fonction de la nature du réseau auquel l'interface est connectée.

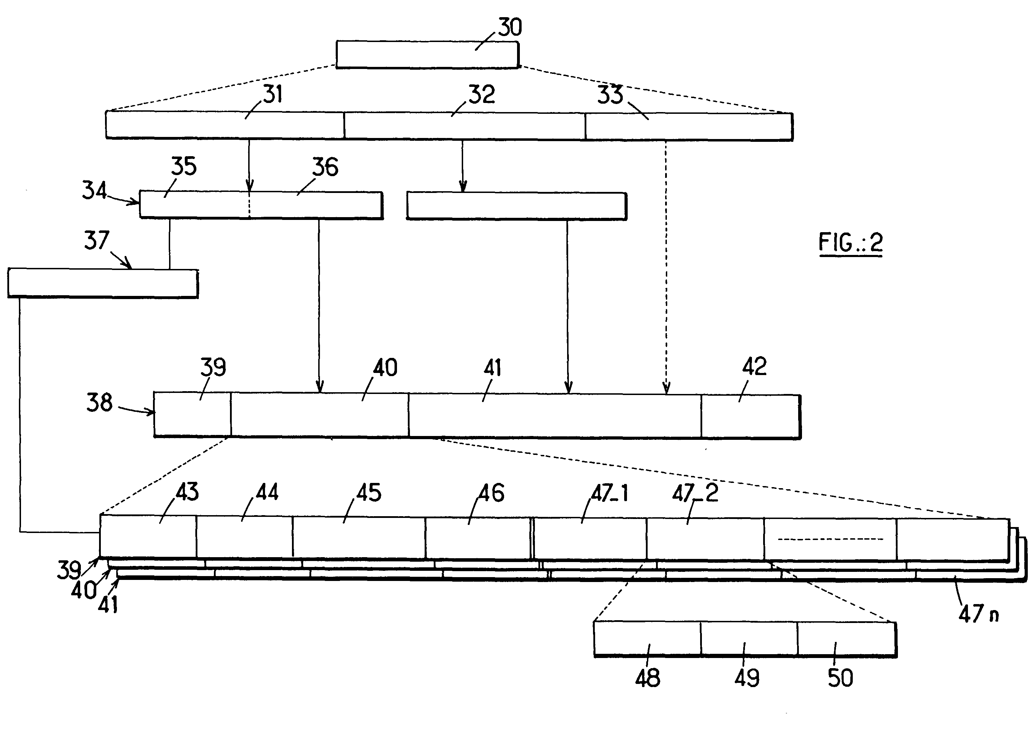

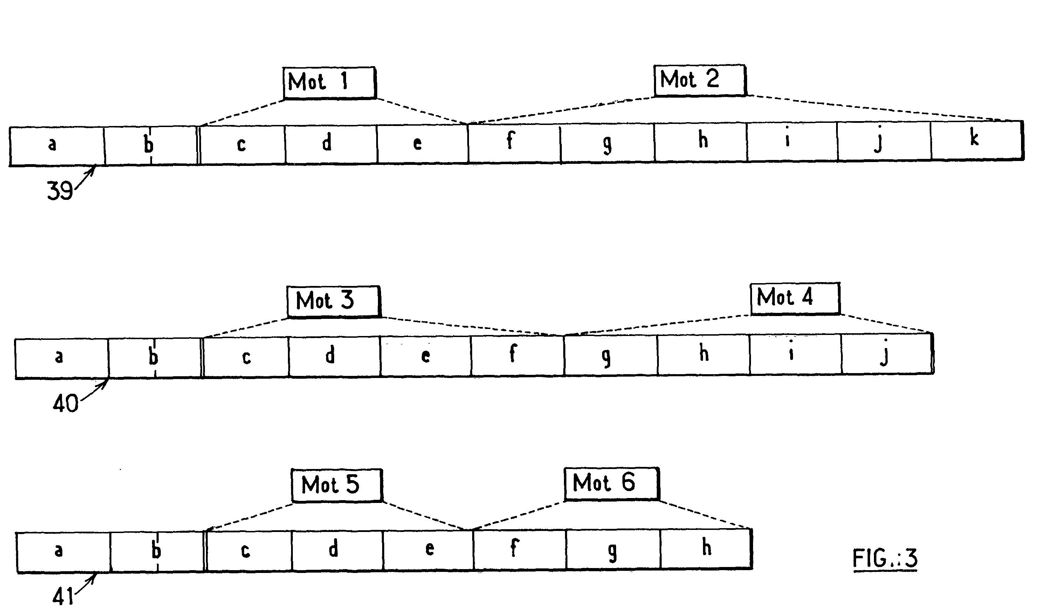

On va maintenant examiner les figures 2 et 3 pour expliquer le format des signaux qui transitent sur les liaisons entre l'unité centrale 1 et les interfaces d'utilisateur (6 à 9) et protocolaires (15 à 18) représentées sur la figure 1.

Les interfaces 6 à 8 élaborent en collaboration avec les modules d'entrée respectifs 11 à 13 des signaux de commande numériques qui correspondent aux "commandes applicatives" selon la définition donnée ci-dessus.

Un tel signal symbolisé en 30 sur la figure 2 comporte trois champs, à savoir un champ 31 d'identification d'équipement, c'est-à-dire de l'un des équipements susceptibles d'être commandés par l'unité centrale 1, un champ 32 d'identification de la commande qui définit le type de commande à exécuter, et un champ 33 de données complémentaires définissant la valeur de cette commande à exécuter.

Pour donner un exemple concret, la commande applicative peut être destinée à un convecteur de chauffage central (champs 31), devant ajuster la température (champ 32) à une valeur de 10°C (champ 33) dans la pièce où le convecteur est installé.

Le champ 31 contient un code qui est utilisé par l'unité centrale pour extraire de la mémoire 5 les caractéristiques (34) de l'équipement à adresser. On entend par "caractéristiques de l'équipement" notamment une adresse désignant le protocole de commande de cet équipement et l'adresse de l'équipement qui l'identifie dans un réseau 19 à 22 dont cet équipement fait partie.

Le code 34 définissant ces caractéristiques comporte donc au minimum deux champs à savoir un champ d'identification du protocole et de sa version 35 et un champ d'adresse de réseau 36.

L'unité centrale 1 utilise l'adresse de protocole du champ 35 pour chercher la trame du protocole de l'équipement concerné dans la librairie de protocoles 2, opération qui est symbolisée en 37.

Dans l'exemple décrit ici, une trame de protocole désignée par 38 sur la figure 2, constitue ce que l'on désigne par le terme "trame de message protocolaire" (voir définition ci-dessus) qui est une séquence binaire composée d'une pluralité de bits agencés en octets dans quatre champs principaux appelés ici "structures de message", à savoir une structure de message 39 d'en-tête, une structure de message 40 de réseau, une structure de message 41 de données applicatives et une structure de message 42 représentant la fin de la trame de message protocolaire. Sur la figure 2, on a indiqué séparément, en dessous de la trame de message protocolaire et par trois bandes référencées de la même façon, les trois structures de message 39, 40 et 41, la structure 42 de fin de message protocolaire n'étant pas essentielle dans les exemples présentés.

Chaque structure de message 39, 40 et 41 est elle-même subdivisée en une série de champs dont la nature et la constitution dépendent des protocoles associés aux divers équipements raccordés à l'unité centrale 1. En principe, ces structures de message sont toutes différentes selon les fabricants des équipements, situation à laquelle l'invention tente d'apporter un remède.

Dans le protocole représenté à titre d'exemple sur la figure 2, les champs d'une structure de message sont les suivants: un champ 43 qualifiant un nombre de mots-clés contenus dans la structure de message, un champ 44 définissant la taille (le nombre de bits significatifs) de chaque mot-clé, un champ 45 servant à une contrôle de cohérence ou de parité, un champ 46 représentant la taille de ce contrôle, et plusieurs champs 47-1 à 47-n définissant les mots-clés.

En outre, chaque mot-clé est lui-même subdivisé en trois groupes à savoir un groupe 48 représentant la taille du mot, un groupe 49 définissant le type de mot-clé et un groupe 50 représentatif d'une valeur de commande.

Lorsque l'unité centrale 1 extrait la trame de message protocolaire de la librairie de protocoles 2, celle-ci se présente "vide" ce qui revient à dire que chaque champ de la trame susceptible de devenir porteur d'une information ou de données modifiables doit être "rempli" par l'unité centrale 1 avec des données qui qualifient ou chiffrent le contenu de ce champ pour le rôle qui lui est dévolu après constitution complète du message protocolaire. Pour ce qui concerne le remplissage du champ principal de réseau 40, l'unité centrale 1 effectue ce travail à partir des éléments qu'elle extrait de la mémoire de caractéristiques 5 (rectangles 35 et 36 sur la figure 2).

Le champ principal de données applicatives 41 est pourvues des données significatives provenant de la bibliothèque de commandes 3 dont elles sont extraites par l'unité centrale 1 en fonction du contenu du champ d'identification de commande 32 de la commande applicative 30. Par ailleurs, par le champ 33 de données complémentaires de cette commande applicative 30, l'unité centrale 1 remplit la structure de message 41 avec des valeurs appropriées relatives à la commande à exécuter.

On va maintenant décrire le résultat de l'opération de remplissage des structures de message dans le cadre de l'exemple de la figure 2 et en se référant à la figure 3 qui reprend ces structures de message 39, 40 et 41.

Il convient de noter que les structures de message sont formées d'octets entiers, bien que, à strictement parler, certains octets définissent une donnée qui aurait pu être codée avec un nombre de bits inférieur à huit. Par ailleurs, le terme "taille du mot" employé ici signifie que les données significatives de ce mot ont cette taille comptée en bits successifs.

Ceci étant, selon un protocole existant donné choisi à titre illustratif uniquement, la structure de message 39 va recevoir les données suivantes traduites en valeurs binaires:
- octet a l'en-tête comporte deux mots-clés de huit bits chacun;
- octet b parité impaire sur un bit (deux demi-octets);
- octet c la taille du mot n°1 est de huit bits;
- octet d la donnée significative de ce mot n°1 est une valeur d'en-tête fixe du protocole;
- octet e la valeur est égale à 00 en hexadécimal;
- octet f la première donnée significative du mot-clé n°2 à une taille de 3 bits;
- octet g la première donnée significative du mot n°2 est un nombre d'essais d'exécution de la commande applicative en cours;
- octet h la donnée significative est égale à x (x= 0 à 7 par exemple 001 en binaire)
- octet i la seconde donnée significative du mot-clé n°2 a une taille de cinq bits;
- octet j la seconde donnée significative du mot n° 2 est une valeur fixe réservée du protocole;
- octet k la seconde donnée significative est égale à y (y=0 à 31, par exemple 11111 en binaire).

On notera que les mots-clés n°1 et n°2 sont symbolisés au-dessus des octets qui les représentent.

La structure de message 40 se présentera sous la forme suivante:
- octet a une valeur binaire représentant le fait que la structure de message comporte deux mots-clés d'adresse de 16 bits chacun;
- octet b détermine le contrôle de cohérence selon un algorithme prédéterminé sur 6 bits;
- octet c la donnée significative du mot-clé n° 3 a une taille de 16 bits;
- octet d la donnée significative est une adresse;
- octets e et f valeur de l'adresse (par exemple BC et 4E en hexadécimal) de l'équipement visé par la commande applicative dans une zone de la mémoire 2 de caractéristiques dans laquelle sont classés les équipements appartenant à un même groupe (par exemple un convecteur déterminé parmi les convecteurs de l'installation de chauffage de l'habitation)
- octet g la donnée significative du mot-clé n° 4 a une taille de 16 bits;
- octet h la donnée significative de ce mot-clé est une adresse;
- octet i i valeur de l'adresse individuelle (par exemple FD et 08 en hexadécimal) de l'équipement visé par la commande applicative dans la mémoire 2 (par exemple le convecteur déterminé dont il a été question ci-dessus;

Enfin, la structure de message 41 va recevoir les données suivantes:
- octet a une valeur binaire représentant le fait que la structure de message comporte deux mots-clés de données applicatives;
- octet b détermine une parité paire sur 1 bit;
- octet c la donnée significative du mot-clé n° 5 a une taille de 6 bits;
- octet d la donnée significative est une commande ;
- octets e et f code (par exemple 101101 en binaire ou 10°C) de la commande consignée dans la bibliothèque de commandes 3 (il peut s'agir d'une consigne de température qui devra être imposée au convecteur mentionné ci-dessus);
- octet g la donnée significative du mot-clé n° 6 a une taille de 16 bits;
- octet h la donnée significative de ce mot-clé est la valeur associée à la commande applicative (33);
- octet i valeur de consigne à imposer à l'équipement visé par la commande applicative (par exemple 10°C ou la valeur 001010 en binaire).

Comme déjà indiqué ci-dessus, le message protocolaire complété de cette façon à partir de la trame de message protocolaire, appartient à un protocole et à une version de protocole associé à un ou des équipements spécifiques mis sur le marché par un fabricant spécifique.

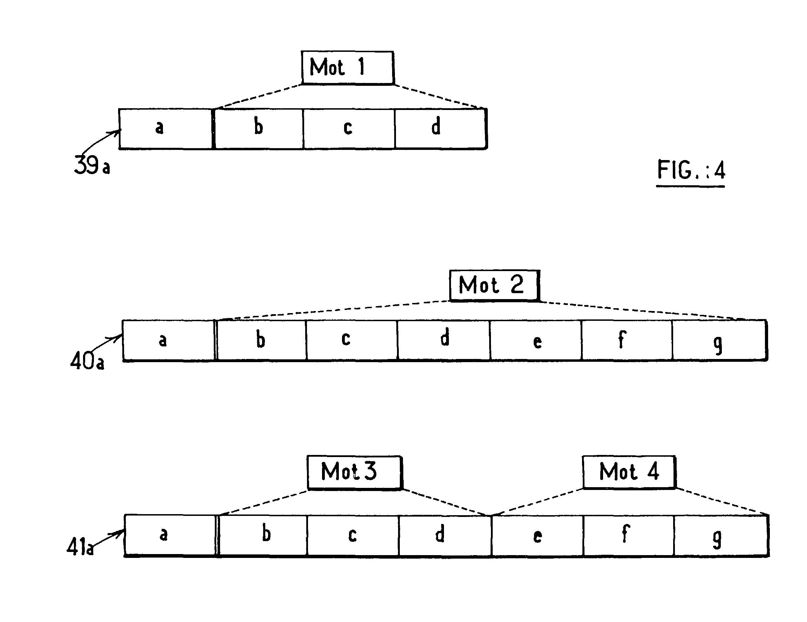

La figure 4 montre à titre d'exemple un autre message protocolaire complété à partir d'une autre trame de message protocolaire par l'unité centrale 1, mais basé sur un protocole spécifique d'autres équipements provenant d'un fabricant différent de celui dont est constitué l'équipement du protocole des figures 2 et 3. Cette figure 4 ne représente que les structures de message remplies par l'unité centrale 1.

Dans cet exemple, la trame de message protocolaire comprend également trois structures de message référencées 39a, 40a et 41a qui ont un rôle analogue à celui des structures de message 39, 40 et 41 du précédent exemple, encore qu'elles aient une forme différente.

Ainsi tout d'abord dans cette trame de message protocolaire, aucune structure de message ne comporte un champ de contrôle de parité.

Par ailleurs, elles sont agencées comme suit:
pour ce qui est de la structure 39a:
   - octet a une valeur binaire représentant le fait que la structure de message comporte un mot-clé d'en-tête de la taille d'un bit;
   - octet b la donnée significative du mot-clé n° 1 a une taille de 1 bit;
   - octet c la donnée significative du mot-clé n°1 est une valeur fixe;
   - octet d la donnée significative de l'entête fixe du protocole est 0 ou 1 (par exemple la valeur 0).
pour ce qui concerne la structure de message 40a:
   - octet a une valeur binaire représentant le fait que la structure de message comporte un mot-clé d'adresse de huit bits;
   - octet b la première donnée significative du mot-clé n° 2 à une taille de 4 bits;
   - octet c la donnée significative du mot-clé n° 2 est une adresse;
   - octet d adresse de réseau du convecteur dans la mémoire de caractéristiques des équipements (par exemple 0010 en binaire);
   - octet e la seconde donnée significative du mot-clé n°2 a une taille de 4 bits;
   - octet f la seconde donnée significative du mot-clé n°2 est une adresse;
   - octet g adresse individuelle de l'équipement dans la mémoire de caractéristiques des équipements (par exemple 1011 en binaire);
pour ce qui concerne la structure de message 41a:
   - octet a une valeur binaire représentant le fait que la structure de message comporte deux mots-clés de données applicatives;
   - octet b la taille de la donnée significative du mot-clé n° 3 est de 8 bits;
   - octet c la donnée significative du mot-clé n° 3 est une commande;
   - octet d code de la commande (par exemple une consigne de température telle que AE en hexadécimal) issu de la bibliothèque des commandes 3;
   - octet e la taille de la donnée significative du mot-clé n° 4 est de 8 bits;
   - octet f la donnée significative du mot-clé n° 3 est une valeur;
   - octet g la valeur de consigne est de x (par exemple OA en hexadécimal pour une consigne de température de 10°C).

On constate donc que grâce à l'invention, l'unité centrale 1 peut travailler avec des trames de message protocolaire ayant des structures de message très différentes, et constituer les messages protocolaires à partir des données qu'elle peut extraire des diverses mémoires représentées sur la figure 1.

Les exemples de messages protocolaires que l'on vient de décrire concernent des commandes applicatives qui passent de l'une des interfaces d'entrée 6 à 9 à l'une des interfaces de sortie 15 à 18. Les spécialistes comprendront que des messages protocolaires composés de structures de message analogues peuvent passer en sens opposé, par exemple pour informer l'unité centrale et l'utilisateur de l'acquittement d'une commande ou pour fournir des données relatives à l'état de ou des équipements desservis.

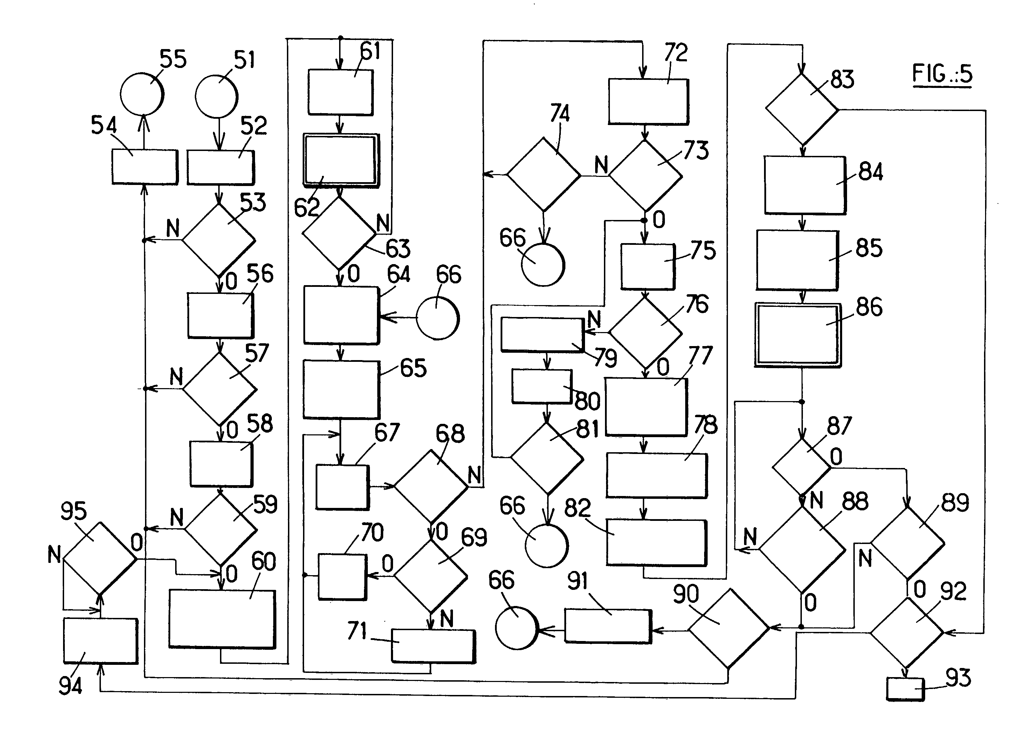

On va maintenant décrire le programme exécuté par l'unité de commande 1 pour traduire une commande applicative déclenchée au niveau de l'une des interfaces 6 à 9 en un message protocolaire acheminé vers l'une des interfaces 15 à 18 en se référant à l'organigramme de la figure 5.

Le processus d'émission d'une commande applicative est déclenché en 51 par la réception par l'unité centrale d'un message élaboré dans l'un des modules d'entrée 11 à 13 à partir d'un signal qui lui est fourni par l'une des interfaces 6 à 9. Ce message est composé comme celui illustré en 31 à 33 sur la figure 2. La réception de ce message de commande applicative déclenche une recherche en 52 par l'unité centrale 1 dans la mémoire de caractéristiques 5 pour en extraire l'identification de la version de protocole de l'équipement destinataire ainsi que les adresses de réseau de cet équipement. Si ces données ne sont pas trouvées, un test en 53 renvoie le programme à une opération de signalisation d'erreur en 54 aboutissant à une émission vers le module d'entrée 11 à 13 concerné qui transfère le message d'erreur correspondant à l'interface 6 à 9 ayant émis la commande applicative pour en informer l'auteur de celle-ci. Cette opération est illustrée en 55.

Ensuite, l'unité centrale 1 effectue une recherche en 56 dans la bibliothèque de commandes 3 pour en extraire les données applicatives spécifiées dans le champs 32 de la commande applicative. En cas d'échec de cette recherche constaté éventuellement par le test 57, le programme renvoie vers l'opération 54 pour signaler l'erreur à l'utilisateur. Dans le cas contraire, l'unité centrale 1 effectue une autre recherche en 58 dans la librairie de protocoles 2 pour en extraire la trame de message protocolaire à utiliser pour l'équipement à commander (trame 38 de la figure 2). En cas d'échec, un test en 59 renvoie vers l'opération 54 pour en informer l'utilisateur. Dans le cas contraire, le programme passe aux opérations aboutissant au remplissage de chaque structure de message de la trame avec les données à transmettre. Un premier groupe 60 de ces opérations consiste à attribuer un numéro de message protocolaire par incrémentation d'une unité du numéro de message protocolaire précédent, à initialiser à 1 le nombre d'essais prévu pour l'émission de ce message protocolaire et à introduire dans le message une donnée spécifiant si un acquittement doit être renvoyé après exécution du message protocolaire au niveau de l'équipement (le nombre d'essais et la demande d'acquittement sont deux des caractéristiques des protocoles stockés dans la librairie et désignés par des mots-clés particuliers). Il est à noter que par soucis de simplification, certaines de ces opérations ne figurent pas dans l'illustration des structures de message des figures 3 et 4.

Ensuite, les mots-clés des structures de messages sont successivement remplis, lors de l'exécution d'une boucle qui comprend une opération 61 de lecture du mot de la trame, une opération 62 de remplissage de ce mot avec les données spécifiées par la commande applicative et un test en 63 vérifiant si le dernier mot de la trame a été rempli. Ainsi, cette boucle est parcourue tant qu'il reste encore des mots à remplir dans la trame.

Le test 63 ayant constaté qu'il n'y a plus de mots à traiter, le programme poursuit en 64 par la transmission du message protocolaire à l'interface protocolaire 15 à 18 correspondant à l'équipement destinataire et par la réception de ce même message par cette interface en 65.

On verra par la suite que l'opération 64 peut être interrompue par une commande d'interruption de transmission 66.

L'interface protocolaire concernée traite chaque octet du message protocolaire reçu pendant une opération 67 qui appartient à une boucle parcourue autant de fois qu'il y a d'octets dans le message protocolaire. Le test en 68 vérifie s'il y a encore un octet à traiter. Dans l'affirmative, un test est effectué en 69 pour vérifier si l'octet en question est un octet d'administration qui définit le type de commande traité. Dans l'affirmative, un calcul est effectué en 70 pour déterminer la taille du mot traité et le programme reboucle sur la lecture du prochain octet en 67. Sinon, l'interface protocolaire sérialise les octets reçus en 71 dans un mot de message protocolaire à émettre d'une taille définie par l'octet d'administration. Quand il n'y a plus d'octets à traiter, le message protocolaire peut être émis sur le réseau auquel est connectée l'interface considérée.

En 72, l'interface protocolaire met en attente le message tant qu'un délai minimum imposé d'attente entre deux émissions de messages protocolaires n'est pas dépassé, ce qui est vérifié au cours du test 73. Tant que le délai n'est pas dépassé, un test en 74 vérifie si un message est en cours de réception. Dans l'affirmative, l'interruption de l'émission 66 est commandée. Sinon, l'interface protocolaire lit chaque mot du message protocolaire à émettre en 75, un test 76 étant effectué pour vérifier si le dernier mot du message est lu.

Dans l'affirmative, le délai d'attente d'émission est réinitialisé en 77, puis en 78, l'interface protocolaire transmet un signal de fin d'émission à l'unité centrale 1.

La réponse au test 76 étant négative (il reste encore des mots à émettre), le mot est émis en 79 et une opération d'écoute de réseau est effectuée en 80 et le résultat est testé en 81. Ce test constatant que le mot a bien été émis, le programme reboucle sur l'opération 75 pour procéder à l'émission d'un nouveau mot du message protocolaire. Dans le cas contraire, une interruption d'émission 66 est commandée.

L'unité centrale ayant reçu en retour le signal de fin d'émission de l'interface protocolaire (opération 82), un test est effectué en 83 pour vérifier si un acquittement de message est demandé. Dans l'affirmative, l'opération 84 réinitialise un délai d'attente d'acquittement, l'opération 85 positionne un indicateur d'attente d'acquittement en attendant la constitution du message d'acquittement en 86 pour permettre la vérification de la bonne réception du message protocolaire.

Un test en 87 vérifie la réception du message d'acquittement et un test en 88 vérifie si un délai d'attente de message d'acquittement n'est pas dépassé. Tant que ce n'est pas le cas, le programme reboucle sur le test 87 pour attendre le message. Si le test 87 atteste de la réception d'un message, il est vérifié par un test 89 si le message d'acquittement reçu correspond à celui auquel on devait s'attendre.

Si le délai d'acquittement est dépassé (réponse positive au test 88) ou si le message d'acquittement ne correspond pas au message attendu, le programme passe à un test 90 pour vérifier si le nombre d'essais autorisé n'est pas dépassé. S'il n'y a pas de dépassement, la valeur du nombre d'essais enregistré jusqu'à présent est incrémentée d'une unité (opération 91) et un signal d'interruption 66 est engendré.

Si le message reçu correspond au message attendu (réponse positive au test 89), le programme effectue un test en 92 pour vérifier si le message était le dernier de la commande en cours d'exécution. Si c'est le cas, le programme se termine en 93. Le test 93 est également effectué après une réponse négative du test 83 vérifiant si un acquittement est demandé.

Si le test 92 reçoit une réponse négative, c'est qu'il y a encore un message à émettre moyennant quoi, le programme initialise un délai en 94 fixé pour séparer temporellement deux messages protocolaires successifs. Un test surveile l'écoulement de ce délai. S'il est dépassé le programme reboucle sur l'opération 60 pour renouveler l'émission du message suivant.

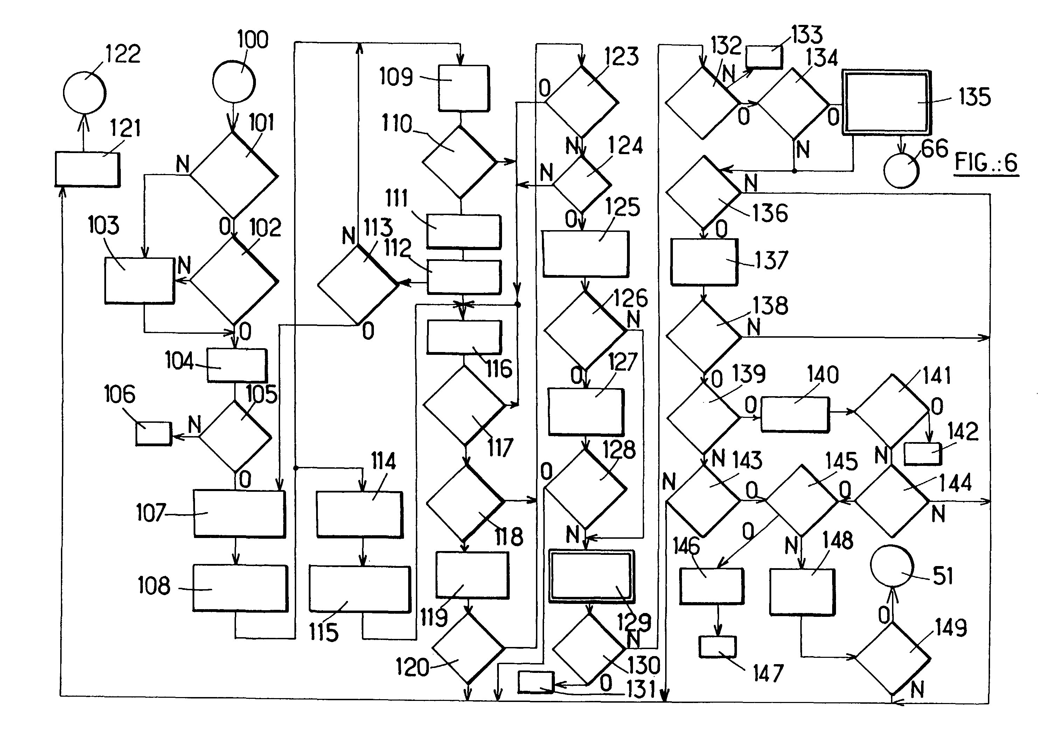

En se référant maintenant à la figure 6, on va décrire la partie du programme qui concerne la réception d'un message en retour en provenance des interfaces protocolaires 15 à 18 et par conséquent des réseaux et des équipements auxquels elles sont connectées.

L'unité centrale 1 surveille en permanence les interfaces protocolaires pour déterminer si un tel message en retour est présent. Si l'arrivée d'un tel message est constatée en 100, le programme effectue d'abord un test 101 pour vérifier si une émission est en cours avec un protocole déterminé. Si c'est le cas, un test 102 est effectué pour vérifier si le message protocolaire en émission est basé sur le même protocole que le message en retour. Dans le cas d'une réponse négative aux tests 101 et 102, un changement de protocole est effectué sur celui du message en retour en 103.

L'interface protocolaire concernée se met alors à l'écoute de son réseau en 104 et vérifie par un test 105 si un message en retour est en train d'être reçu. Si ce n'est pas le cas, le programme se termine en 106.

Si des données d'un message en retour sont reçues, l'interface protocolaire lit la taille et le nombre de mots du protocole (opération 107) et en avertit l'unité centrale 1 par transmission d'un octet d'administration désignant le protocole relevant (opération 108).

Le programme entre alors dans une boucle de lecture de mots qui comporte une opération 109 de lecture de mot, un test 110 vérifiant si le dernier mot a été lu, une opération 111 de constitution des octets de mot et une opération 112 de transmission de mot. Un test 113 vérifie si le nombre de mots prescrit est atteint. La boucle est parcourue autant de fois que nécessaire pour la transmission de tous les octets. Si le test 113 reçoit une réponse positive, le programme reboucle sur l'opération de lecture de la structure de message suivante (opération 107).

Lorsque l'unité centrale 1 reçoit un octet d'administration (opération 114), elle passe en mode de réception, étant entendu qu'elle connaît déjà le protocole utilisé et la structure de message à recevoir. L'opération 115 consiste ensuite à la lecture du contrôle de cohérence sur tous les mots du protocole.

L'opération 116 symbolise la réception des octets des mots qui est associée à un test 117 pour vérifier si le dernier octet du mot a été reçu. Si la réponse est négative, la boucle est parcourue de nouveau à l'opération 116. Sinon, un test 118 est effectué pour déterminer si un contrôle de cohérence doit être effectué. Dans l'affirmative, ce contrôle est effectué par l'unité centrale 1 en 119.

Si au cours du test suivant 120, une erreur de cohérence est détectée, un code d'erreur 121 est engendré et émis vers l'une des interfaces d'entrée 6 à 9 (opération 122).

Lorsqu'un test 123 constate que le nombre de mots de la structure de message est atteint et lorsqu'un test 124 constate que le dernier octet du dernier mot est reçu, l'unité centrale cherche le contrôle de cohérence à effectuer sur la structure de message reçue dans la librairie de protocoles 2 (opération 125). Sinon, le programme reboucle sur l'opération 116 de réception d'un octet de mot.

Un test 126 est effectué pour vérifier si un contrôle de cohérence doit être effectué. Si oui, ce contrôle est fait en 127 puis un test est effectué en 128 pour vérifier si la structure de message présente une erreur de cohérence. Dans l'affirmative, le programme passe à l'opération 121 et le processus de réception est interrompu. Sinon, le programme passe à l'opération 129. Si le test en 126 s'avère négatif (absence de contrôle de cohérence), le programme passe directement à l'opération 129.

Cette opération consiste, à partir du message protocolaire ainsi reconstitué, en une analyse séquentielle par l'unité centrale 1 de chacun des octets de ce message en fonction de la structure de la trame de protocole extraite précédemment de la librairie de protocoles. Si le message reçu correspond à un acquittement et si l'indicateur d'acquittement est positionné, un test 130 de vérification de ce fait renvoie à la fin du programme en 131 qui termine le traitement de réception de message. Sinon, l'unité centrale reconstitue le message protocolaire sous le format interne standard avec l'identification de l'équipement émetteur à partir du protocole et des adresses de cet équipement, la commande à partir du message protocolaire à l'aide de la bibliothèque de commandes 5 et les données complémentaires.

En 132, l'unité centrale effectue un test pour vérifier si les adresses obligatoires définies dans la librairie de protocoles et reçues dans le message sont toutes présentes et correspondent aux adresses obligatoires de l'équipement émetteur. Si ce n'est pas le cas, le message n'était pas destiné à l'unité centrale et le processus de réception est interrompu en 133. Dans le cas contraire, un test en 134 vérifie si un acquittement du message reçu est demandé. Dans l'affirmative, l'unité centrale constitue le message d'acquittement correspondant au cours de l'opération 135. Sinon, le programme passe directement à l'opération suivante.

Puis, un test 136 est effectué pour déterminer si le message reçu contient une fonction à exécuter. Dans l'affirmative, la fonction du message est recherchée dans la bibliothèque de commandes 3 (opération 137). Si cette fonction n'est pas trouvée (test 138), le programme passe à l'opération 121 signalant une erreur. Dans le cas contraire, un test 139 vérifie si une adresse d'équipement est contenue dans le message reçu. Dans l'affirmative, les caractéristiques de cet équipement sont recherchées dans la mémoire de caractéristiques 5 (opération 140). Si les caractéristiques sont trouvées, (test 141) le processus de réception est terminé en 141, une nouvelle commande applicative étant ainsi constituée pour pouvoir être traitée ensuite comme décrit ci-dessus à propos de la figure 5.

Les réponses négatives données par les tests 139 et 141 sont respectivement soumises à deux autres tests 143 et 144 pour déterminer si la commande du message reçu est ou non une commande d'installation d'un nouvel équipement à ajouter aux équipements déjà installés. Les réponses à ces deux tests étant négatives, le programme édite un message d'erreur par l'opération 121.

Si les tests 143 et 144 reçoivent une réponse affirmative, un test est effectué en 145 pour vérifier si l'équipement concerné possédait déjà une adresse (cas d'attribution d'adresse par un système tiers), cette adresse est ajoutée avec ce nouvel équipement dans la mémoire de caractéristiques 5 (opération 146) et le programme prend fin en 147. Sinon, l'opération suivante 148 consiste à attribuer une nouvelle adresse, opération qui est pilotée par l'unité centrale elle-même. A cet effet, un test est effectué en 149 pour vérifier si l'adresse est disponible. Dans l'affirmative, le programme retourne à l'opération 51 de la figure 5. Sinon, un message d'erreur est émis par l'opération 121.

Il est à noter que les deux protocoles à l'aide desquels le processus de l'invention a été illustré peuvent être de tout type associé à un équipement quelconque disponible dans le commerce.

## Revendications

1. Centrale domotique destinée à la gestion d'équipements dans une habitation, bâtiment ou analogue, les équipements étant raccordés à au moins un réseau (19 à 22) et étant commandés par des protocoles pouvant être différents d'un équipement à l'autre, ladite centrale comprenant une unité centrale de gestion (1) communiquant d'une part avec des interfaces d'entrée (6 à 13) adaptées pour recevoir de l'extérieur des commandes d'utilisateur à exécuter par lesdits équipements et pour transmettre à partir de ladite unité centrale (1) des messages en retour renseignant l'utilisateur sur l'état desdits équipements, ladite unité centrale de gestion (1) communiquant également avec des interfaces de sortie (15 à 18) destinées à transférer avec un format approprié lesdites commandes et lesdits messages en retour respectivement entre ladite unité centrale (1) et lesdits équipements, ladite unité centrale de gestion (1) étant **caractérisé en ce qu'**elle comprend
- des moyens (5, 2) pour mémoriser pour chacun desdits équipements un jeu de caractéristiques propres à cet équipement et comprenant notamment son protocole de commande et ses adresses dans ledit réseau (19 à 22),
- des moyens (3) pour mémoriser une pluralité de données relatives à des types de commandes susceptibles d'être exécutées par lesdits équipements,
et **en ce que** ladite unité centrale de gestion (1) est agencée pour, à la réception d'une commande en provenance de l'une quelconque desdites interfaces,
- extraire desdits moyens de mémorisation de caractéristiques (5, 2), le protocole et sa version correspondant à ladite commande pour former une trame de message protocolaire (38), ainsi que l'adresse dans le réseau de l'équipement concerné,
- extraire desdits moyens (3) de mémorisation de données, celles correspondant au type de commande à exécuter, et
- associer à ladite trame (38) lesdites données d'adresse et type de commande et le cas échéant des valeurs de commande contenues dans ladite commande d'utilisateur à exécuter.

2. Centrale suivant la revendication 1 **caractérisée en ce que** lesdites interfaces d'entrée sont agencées pour, à partir desdites commandes d'utilisateur, élaborer des commandes applicatives comprenant un champ d'identification d'équipement, un champ d'identification de commande et, le cas échéant, un champ de données complémentaires.

3. Centrale suivant la revendication 2 **caractérisée en ce que** ladite unité centrale de gestion (1) est agencée pour, à l'aide dudit champ d'identification d'équipement, extraire desdits moyens (5,2) de mémorisation de jeux de caractéristiques, le protocole de commande correspondant à l'équipement concerné.

4. Centrale suivant l'une quelconque des revendications 1 à 3, **caractérisée en ce que** ladite interface d'entrée (6 à 13) comporte un appareillage actionné directement par un utilisateur, un modem téléphonique, un ordinateur domestique et/ou une installation de télévision ou de vidéo interactive.

5. Centrale suivant l'une quelconque des revendications 1 à 4, **caractérisée en ce qu'**au moins certains desdits équipements sont branchés à au moins l'une desdites interfaces de sortie (15 à 18) par l'intermédiaire d'un réseau (19 à 22).

6. Centrale suivant la revendication 5 **caractérisée en ce que** ledit réseau est le réseau de distribution apportant l'énergie audit équipement, réseau sur lequel transitent lesdites commandes et lesdits messages en retour par l'intermédiaire de la transmission par courants porteurs.

## Patentansprüche

1. Hausleitsteuerungsgerät zur Steuerung von Einrichtungen in einer Wohnung, in einem Gebäude oder dergleichen, die an mindestens ein Netz (19 bis 22) angeschlossen sind und durch Protokolle gesteuert werden, die von Einrichtung zu Einrichtung verschieden sein können, umfassend eine zentrale Steuereinheit (1), die einerseits mit Eingangsschnittstellen (6 bis 13) kommuniziert, die dafür ausgelegt sind, von außen kommende Benutzerbefehle, die von den Einrichtungen auszuführen sind, zu empfangen und von dieser zentralen Steuereinheit (1) aus Rückmeldungen zu übertragen, die den Benutzer über den Zustand dieser Einrichtungen informieren, wobei die zentrale Steuereinheit (1) ferner mit Ausgangsschnittstellen (15 bis 18) kommuniziert, die dazu bestimmt sind, die Befehle bzw. die Rückmeldungen zwischen der zentralen Steuereinheit (1) und den Einrichtungen mit einem geeigneten Format zu übertragen, wobei die zentrale Steuereinheit **dadurch gekennzeichnet ist, dass** sie
- Mittel (5,2), um bei jeder dieser Einrichtungen einen Satz von dieser Einrichtung eigenen Merkmalen zu speichern, der insbesondere ihr Steuerprotokoll und ihre Adresse in dem Netz (19 bis 22) umfasst, und
- Mittel (3) zum Speichern einer Vielzahl von Daten, die sich auf Befehltypen beziehen, die von den Einrichtungen ausgeführt werden können, umfasst
und dass die zentrale Steuereinheit (1) dafür ausgelegt ist, bei Empfang eines von einer der Schnittstellen kommenden Befehls :
- den Merkmalspeichermitteln (5, 2) das Protokoll und seine dem Befehl entsprechende Version zu entnehmen, um einen Protokollmeldungsblock (38) zu bilden, sowie die Adresse der betreffenden Einrichtung im Netz,
- den Datenspeichermitteln (3) die dem auszuführenden Befehlstyp entsprechenden Daten zu entnehmen und
- dem Block (38) die Adress- und Befehlstypdaten und ggf. Befehlswerte, die im auszuführenden Benutzerbefehl enthalten sind, zuzuordnen.

2. Steuerungsgerät nach Anspruch 1, **dadurch gekennzeichnet, dass** die Eingangsschnittstellen dafür ausgelegt sind, aus den Benutzerbefehlen Anwendungsbefehle herzustellen, die ein Einrichtungsidentifizierungsfeld, ein Befehlsidentifizierungsfeld und ggf. ein Ergänzungsdatenfeld umfassen.

3. Steuerungsgerät nach Anspruch 2, **dadurch gekennzeichnet, dass** die zentrale Steuereinheit (1) dafür ausgelegt ist, mit Hilfe des Einrichtungsidentifizierungsfelds, den Mitteln (5,2) zum Speichern von Merkmalsätzen das der betreffenden Einrichtung entsprechende Befehlsprotokoll zu entnehmen.

4. Steuerungsgerät nach einem der Ansprüche 1 bis 3, **dadurch gekennzeichnet, dass** die Eingangsschnittstelle (6 bis 13) ein direkt von einem Benutzer betätigtes Gerät, ein Fernsprechmodem, einen Heimcomputer und/oder eine interaktive Fernseh- oder Videoanlage umfasst.

5. Steuerungsgerät nach einem der Ansprüche 1 bis 4, **dadurch gekennzeichnet, dass** mindestens manche dieser Einrichtungen über ein Netz (19 bis 22) an mindestens eine der Ausgangsschnittstellen (15 bis 18) angeschlossen sind.

6. Steuerungsgerät nach Anspruch 5, **dadurch gekennzeichnet, dass** das Netz das die Einrichtung mit Energie versorgende Netz ist, wobei die Befehle und die Rückmeldungen in diesem Netz mittels Übertragung durch Trägerströme befördert werden.

## Claims

1. A home automation center for controlling equipment units in a dwelling, building or the like, the equipment units being connected to at least one network (19 to 22) and controlled by protocols that can differ from one equipment unit to another, said center including a central control unit (1) communicating on the one hand with input interfaces (6 to 13) adapted to receive external user commands to be executed by said equipment units and to transmit from said central unit (1) return messages informing the user of the status of said equipment units, said central control unit (1) also communicating with output interfaces (15 to 18) for transferring said commands and said return messages, with an appropriate format, respectively between said central unit (1) and said equipment units, said central control unit (1) being **characterized in that** it includes:
- means (5, 2) for memorizing for each of said equipment units a set of characteristics specific to that equipment unit and including in particular its control protocol and its addresses in said network (19 to 22), and
- means (3) for memorizing data relating to types of commands that said equipment units can execute,
and **in that** said central control unit (1) is adapted, on receiving a command from any of said interfaces:
- to extract from said memorizing means (5, 2) for memorizing sets of characteristics the protocol and its version corresponding to said command to form a protocol message frame (38) and the address in the network of the equipment unit concerned,
- to extract from said memorizing means (3) for memorizing data, the data corresponding to the type of command to be executed, and
- to associate with said frame (38) said address and type of command data and, where applicable, command values contained in said user command to be executed.

2. A center according to claim 1, **characterized in that** said input interfaces are adapted to produce, from said user commands, application commands including an equipment unit identification field, a command identification field, and, where applicable, a complementary data field.

3. A center according to claim 2, **characterized in that** said central control unit (1) is adapted to extract, with the help of said equipment identification field, from said memorizing means (5, 2) for memorizing sets of characteristics, the command protocol corresponding to the equipment unit concerned.

4. A center according to any of claims 1 to 3, **characterized in that** said input interface (6 to 13) includes a device actuated directly by a user, a telephone modem, a domestic computer and/or an interactive video or television installation.

5. A center according to any of claims 1 to 4, **characterized in that** at least some of said equipment units are connected to at least one of said output interfaces (15 to 18) by a network (19 to 22).

6. A center according to claim 5, **characterized in that** said network is a distribution network supplying power to said equipment unit, on which network said commands and said return messages are conveyed by carrier currents.
